# EUROPÄISCHE PATENTSCHRIFT

(11) **EP 2 418 106 B1**
(45) Veröffentlichungstag und Bekanntmachung des Hinweises auf die Patenterteilung: **24.04.2013**
(21) Anmeldenummer: 11169081.4
(22) Anmeldetag: 08.06.2011
(51) Int. Cl.: B60C 27/08, F16B 45/04

(54) **Sicherheitsverschluss für eine Kette einer Gleitschutzkette**
Safety closure for a chain of a anti-skid chain
Fermeture de sécurité pour une chaîne antidérapante

(43) Veröffentlichungstag der Anmeldung: 15.02.2012
(73) Patentinhaber: Pewag Schneeketten GmbH & Co KG, 9371 Brückl (AT)
(72) Erfinder: Schober, Andreas, 8010 Graz (AT); Pengg, Mag. DI Ägyd, 9020 Klagenfurt (AT)
(74) Vertreter: Matschnig, Franz

(56) Entgegenhaltungen:
- CH-A5- 671 439
- DE-C- 561 788
- US-A- 1 458 086
- US-A- 2 104 193

## Beschreibung

Die Erfindung bezieht sich auf einen Sicherheitsverschluss für eine Kette einer Gleitschutzkette mit zwei Taschen zur Aufnahme eines Endgliedes der Kette, wobei die erste Tasche von einem Hakenteil begrenzt ist, ein Gehäuse zur Aufnahme der Platte vorgesehen ist, in einem zusammengesetzten Betriebszustand die Platte in dem Gehäuse zwischen einer Offenstellung und einer Verschlussstellung verschiebbar gelagert ist und in der Offenstellung die erste Tasche durch das Gehäuse zu dem Randbereich hin freigegeben ist, wogegen die zweite Tasche zu dem Randbereich hin durch das Gehäuse abgeschlossen ist und in der Verschlussstellung sowohl die erste als auch die zweite Tasche zu dem Randbereich hin durch das Gehäuse abgeschlossen sind.

Zum Verbinden der Glieder von Seitenketten von Schneeketten sind sogenannte Schlinghaken bekannt geworden und handelsüblich, z.B. das Modell SMX der Anmelderin, die aus einer Platte mit zwei Taschen zur Aufnahme von Endgliedern der Seitenkette bestehen. Einfache Verschlüsse dieser Art haben den Nachteil, dass sie schwer zu öffnen sind, falls die Kette unter Zug steht und dass sie sich andererseits bei lockerer Kette selbstständig öffnen können.

Bei einem Sicherheitsverschluss dieser Art, der aus der US 1,458,086 A bekannt geworden ist, wird das erste Kettenglied entweder in die erste oder in die zweite Tasche - je nach Anforderung an die Kettenlänge - eingehängt, das zweite Kettenglied ist hingegen mittels eines Bolzens immer an der Platte fixiert.

Ein Spannschloss nach der DE 561 788 C zeigt ein Zusammenspiel eines Gehäuses mit zwei Platten, die jedoch nicht zwei unterschiedliche Taschen zur Aufnahme von je zwei Kettenendgliedern besitzen. Auch die in der US 2,104,193 A bzw. in der CH 671 439 A5 gezeigten Verbindungsglieder besitzen nicht zwei unterschiedliche Taschen.

Es ist eine Aufgabe der Erfindung einen Verschluss zu schaffen, der diese Nachteile nicht aufweist, von flacher Bauart ist und günstig hergestellt werden kann.

Die Erfindung soll leicht zu montierende Sicherheitsverschlüsse von Seitenketten ermöglichen, die jedoch im Betrieb ein ungewolltes Lösen der Kettenverbindung verhindern.

Diese Aufgabe wird mit einem Verschluss der eingangs genannten Art gelöst, bei welchem erfindungsgemäß die zweite Tasche zur Aufnahme eines zweiten Kettengliedes ausgebildet ist.

Es ist von Vorteil, wenn das Gehäuse zumindest einen, zumindest einer Tasche zugeordneten Längschlitz aufweist, welcher auch in der Verschlussstellung ein Verschwenken eines in diese Tasche eingehängten Endgliedes ermöglicht.

Weiters ist es zweckmäßig, wenn das Gehäuse einen in der Verschlussstellung die erste Tasche zu dem Randbereich hin verschließenden Vorsprung aufweist. Dabei kann vorgesehen sein, dass an dem Vorsprung eine abstehende Rastnase vorgesehen ist, welche in einem zusammengesetzten Betriebszustand mit der äußeren Begrenzung der ersten Tasche zusammenwirkt, um ein Verschieben der Platte im Sinne einer Freigabe der zweiten Tasche zu verhindern. Dadurch wird somit ein Auseinanderfallen des Verschlusses während seiner Verwendung verhindert.

Für ein einfaches Einhängen des zweiten Kettengliedes beim Zusammensetzen des Verschlusses ist es von Vorteil, wenn die zweite Tasche von dem Randbereich aus zu diesem im Wesentlichen normal verläuft und sodann in einen etwa rechtwinklig, parallel zu dem Randbereich und zu dem ersten Ende hin verlaufenden, abgewinkelten Endbereich übergeht.

Ein einfaches Zusammenhalten der beiden Teile des Verschlusses wird ermöglicht, falls die Platte aus der Schließstellung gegen die Kraft einer Feder in die Offenstellung verschiebbar ist. Dabei ist eine sehr einfache Ausführung dadurch gekennzeichnet, dass die Feder eine Schrauben-Druckfeder ist, die zwischen einer der zweiten Tasche benachbarten ersten Abstützung an der Platte und einer zweiten Abstützung an dem Gehäuse angeordnet ist.

Die Erfindung ist im Folgenden an Hand einer beispielsweisen Ausführungsform näher erläutert, welche in der Zeichnung veranschaulicht ist. In dieser zeigen
Fig. 1 eine Platte eines erfindungsgemäßen Verschlusses in Seitenansicht mit einem in eine Tasche der Platte eingehängtem Endglied einer Seitenkette,
Fig.2 eine Ansicht nach Fig. 1 mit einer Schrauben-Druckfeder,
Fig. 3 die Platte nach Fig. 2 vor dem Einschieben in das Gehäuse des erfindungsgemäßen Verschlusses,
Fig. 4 die in den Fig. 1 bis 3 gezeigten Teile zusammengesetzt,
Fig. 5 eine Ansicht nach Fig. 4 mit einem in eine weitere Tasche der Platte eingehängten Endglied der Seitenkette,
Fig. 6 die beispielsweise Anordnung des erfindungsgemäßen Verschlusses in einer Seitenkette einer Gleitschutzkette für einen Kfz-Reifen
Fig. 7 eine Seitenansicht eines erfindungsgemäßen Verschlusses ohne eingehängte Endglieder,
Fig. 8 eine Ansicht des Verschlusses von links in Fig. 6,
Fig. 9 eine Draufsicht der Fig. 6,
Fig. 10 einen Schnitt nach der Linie X - X in Fig. 8, jedoch mit Teilen eingehängter Kettenglieder,
Fig. 11 eine der Fig. 7 entsprechende Ansicht, jedoch mit entfernter Platte,
Fig. 12 das Gehäuse des Verschlusses in schaubildlicher Ansicht,
Fig. 13 einen Schnitt nach der Linie XIII - XIII in Fig. 11 und
Fig. 14 die Platte des Verschlusses in schaubildlicher Ansicht.

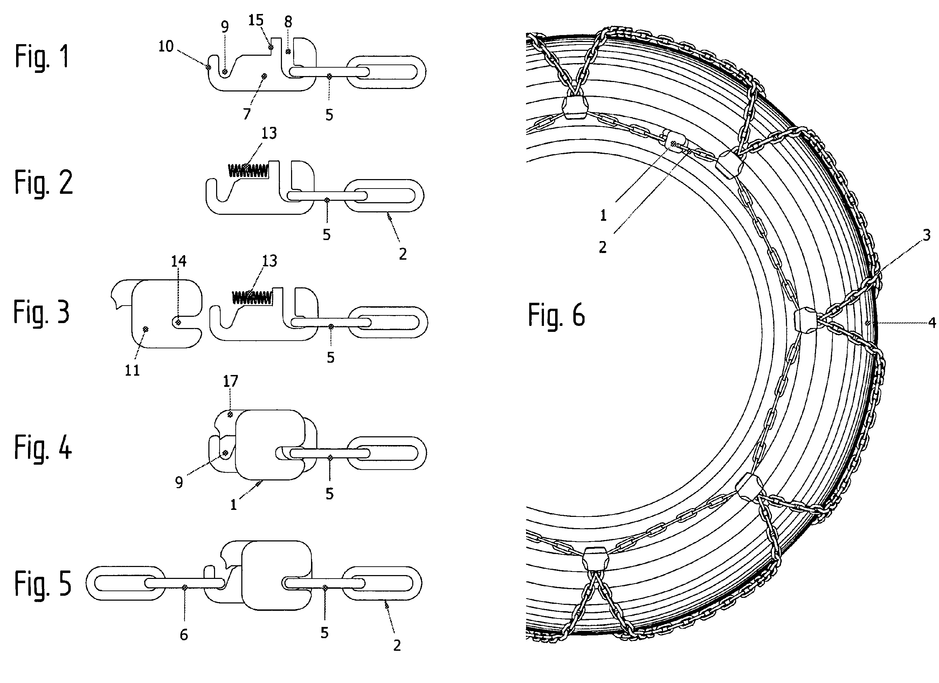

In den Fig. 1 bis 5 ist der Zusammenbau eines Verschlusses nach der Erfindung bzw. dessen Einhängen in eine Seitenkette einer Gleitschutzkette näher beschrieben und in Fig. 6 ist die beispielsweise Anordnung eines erfindungsgemäßen Verschlusses 1 in einer Seitenkette 2 einer Gleitschutzkette 3 für einen Kfz-Reifen 4 gezeigt.

Zum Zusammenhängen der beiden Endglieder 5, 6 der Seitenkette 2 dient eine Platte 7, in welcher zwei Taschen 8, 9 ausgebildet sind. Genauer gesagt ist in der Platte 7 im Bereich eines ersten Endes (in der Zeichnung links) eine zu einem Randbereich (in der Zeichnung oben) hin offene, von einem Hakenteil 10 begrenzte erste Tasche 9 zur Aufnahme eines ersten Kettenendgliedes 6 und im Bereich eines zweiten Endes (in der Zeichnung rechts) eine zu dem Randbereich hin offene zweite Tasche 8 zur Aufnahme des zweiten Kettenendgliedes 5 ausgebildet. Die Platte 7 kann zweckmäßigerweise aus Stahl gefertigt sein.

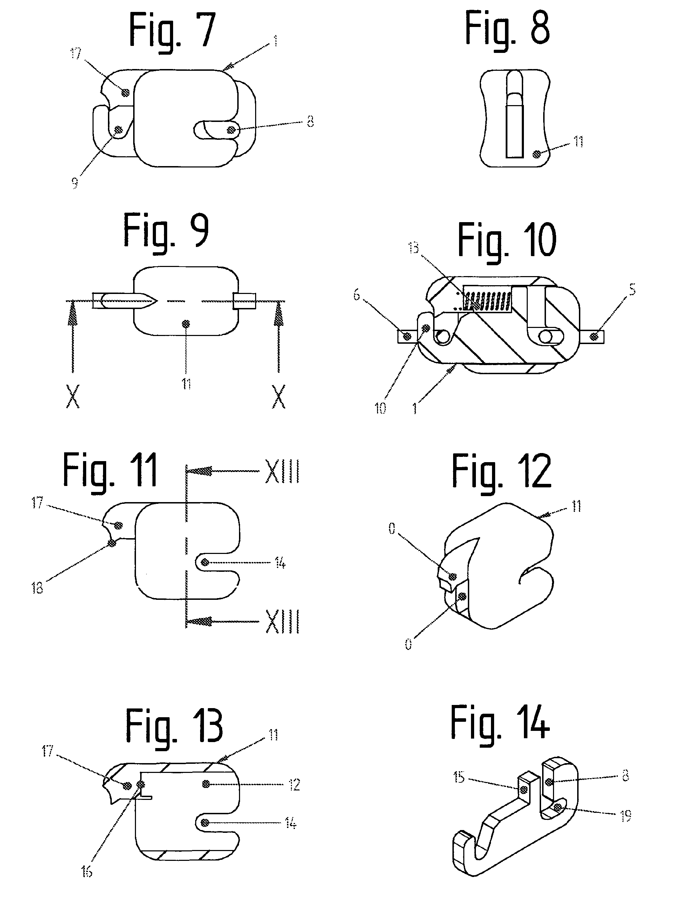

Die Platte 7, die ein Bestandteil des Verschlusses 1 ist, wirkt mit einem Gehäuse 11 (Fig. 3) zusammen, welches den zweiten wesentlichen Bestandteil des Verschlusses 1 bildet und beispielsweise aus einem genügend festem Kunststoff gefertigt sein kann. Das Gehäuse 11 besitzt eine Aufnahme 12 (Fig. 12, 13) zur Aufnahme der Platte 7. Zum Anbringen und Zusammensetzen des Verschlusses 1 wird nach dem Einhängen des Kettengliedes 5 zunächst eine Schrauben-Druckfeder 13 in die in Fig. 2 gezeigte Position gebracht und sodann wird das Gehäuse 11 auf die Platte 7 aufgeschoben, in den Fig. 3 und 4 von links her, bis die in Fig. 4 gezeigte Verschlussstellung erreicht ist.

Man erkennt, dass das Gehäuse 11 einen der zweiten Tasche 8 zugeordneten Längschlitz 14 aufweist (Fig. 11, 13), welcher auch in der Verschlussstellung ein Verschwenken eines in diese Tasche 8 eingehängten, in der Zeichnung liegenden Endgliedes 5 ermöglicht. Vor allem ermöglicht dieser Längsschlitz 14 auch das gegenseitige Verschieben von Gehäuse und Platte in einem bestimmten Bereich.

Das gegenseitige Verschieben von Gehäuse 11 und Platte 7 erfolgt gegen die Kraft der Schrauben-Druckfeder 13, die zwischen einer ersten, der zweiten Tasche 8 benachbarten Abstützung 15 an der Platte 7 (Fig. 1, 14) und einer zweiten, gehäusefesten Abstützung16 bzw. Aufnahme (Fig. 13) für die Feder angeordnet ist.

Das Gehäuse weist weiters einen in der Verschlussstellung die erste Tasche 9 zu dem Randbereich hin verschließenden Vorsprung 17 auf und an diesem Vorsprung ist eine abstehende Rastnase 18 vorgesehen, welche in einem zusammengesetzten Betriebszustand mit der äußeren Begrenzung der ersten Tasche 9 zusammenwirkt, um ein Verschieben der Platte im Sinne einer Freigabe der zweiten Tasche 8 zu verhindern (siehe z.B. Fig. 4, 7, 10, 11).

Das sicher Einhängen des Endgliedes 5 in die zweite Tasche 8 und auch dessen Beweglichkeit in Zusammenwirken mit dem Längsschlitz 14 des Gehäuses 11 wird dadurch erleichtert, dass die zweite Tasche 8 von dem Randbereich aus zu diesem im Wesentlichen normal verläuft und sodann in einen etwa rechtwinklig, parallel zu dem Randbereich und zu dem ersten Ende hin verlaufenden, abgewinkelten Endbereich 19 übergeht (Fig. 14).

Von der in den Fig. 4 und 10 ersichtlichen Verschlussstellung ausgehend kann das Gehäuse 11 in Richtung des zweiten Kettengliedes gegen die Kraft der Feder 13 so weit verschoben werden, dass die erste Tasche 9 nach oben hin offen ist (Fig. 5), sodass nun das erste Kettenglied 6 eingehängt werden kann. Danach lässt man das Gehäuse 11 wieder durch die Kraft der Feder 13 in die Verschlussstellung zurück gleiten, bis die Rastnase 18 an der inneren Fläche des Hakenteils 10 ansteht. In dieser, aus Fig. 10 gut ersichtlichen Gebrauchsstellung sind beide Endglieder 5, 6 der Seitenkette 2 sicher miteinander verbunden, da durch die Wirkung der Druckfeder 13 und der Nase 18 ein selbstständiges Aushängen der Kette 2 nicht möglich ist. Ein Verschieben des Gehäuses ist von dieser Position ausgehend nur in Richtung des zweiten Kettengliedes 5 (in der Zeichnung nach rechts) möglich. Ein solches Verschieben wird man vornehmen, wenn man die Kette 2 durch Herausnehmen des erste Kettengliedes 6 aus der Tasche 9 wieder öffnen möchte, was auch dann leicht möglich ist, wenn die Kette 2 unter Spannung steht.

Wenngleich der erfindungsgemäße Verschluss besonders für eine äußere bzw. innere Seitenkette oder Spannkette bei einer Gleitschutzkette Anwendung findet, da er außer den bereits genannten Vorteilen eine flache Bauweise besitzt und wenig an den Reifenflanken aufträgt, kann er auch an anderen Kettenteilen bekannter Reifenschutzketten eingesetzt werden.

## Patentansprüche

1. Sicherheitsverschluss (1) für eine Kette (2) einer Gleitschutzkette (3) mit zwei Taschen (8, 9) zur Aufnahme eines Endgliedes der Kette, wobei die erste Tasche (9) von einem Hakenteil (10) begrenzt ist, ein Gehäuse (11) zur Aufnahme der Platte (7) vorgesehen ist, in einem zusammengesetzten Betriebszustand die Platte in dem Gehäuse zwischen einer Offenstellung und einer Verschlussstellung verschiebbar gelagert ist und in der Offenstellung die erste Tasche (9) durch das Gehäuse zu dem Randbereich hin freigegeben ist, wogegen die zweite Tasche (8) zu dem Randbereich hin durch das Gehäuse abgeschlossen ist und in der Verschlussstellung sowohl die erste (9) als auch die zweite (8) Tasche zu dem Randbereich hin durch das Gehäuse (11) abgeschlossen sind, **dadurch gekennzeichnet, dass** die zweite Tasche (8) zur Aufnahme eines zweiten Kettengliedes (5) ausgebildet ist.

2. Sicherheitsverschluss (1) nach Anspruch 1, **dadurch gekennzeichnet, dass** das Gehäuse (11) zumindest einen, zumindest einer Tasche (8) zugeordneten Längschlitz (14) aufweist, welcher auch in der Verschlussstellung ein Verschwenken eines in diese Tasche eingehängten Endgliedes (5) ermöglicht.

3. Sicherheitsverschluss (1) nach Anspruch 1 oder 2, **dadurch gekennzeichnet, dass** das Gehäuse (11) einen in der Verschlussstellung die erste Tasche (9) zu dem Randbereich hin verschließenden Vorsprung (17) aufweist.

4. Sicherheitsverschluss (1) nach Anspruch 3, **dadurch gekennzeichnet, dass** an dem Vorsprung (17) eine abstehende Rastnase (18) vorgesehen ist, welche in einem zusammengesetzten Betriebszustand mit der äußeren Begrenzung der ersten Tasche (9) zusammenwirkt, um ein Verschieben der Platte im Sinne einer Freigabe der zweiten Tasche (8) zu verhindern.

5. Sicherheitsverschluss (1) nach einem der Ansprüche 1 bis 4, **dadurch gekennzeichnet, dass** die zweite Tasche (8) von dem Randbereich aus zu diesem im Wesentlichen normal verläuft und sodann in einen etwa rechtwinklig, parallel zu dem Randbereich und zu dem ersten Ende hin verlaufenden, abgewinkelten Endbereich (19) übergeht.

6. Sicherheitsverschluss (1) nach einem der Ansprüche 1 bis 5, **dadurch gekennzeichnet, dass** die Platte (7) aus der Schließstellung gegen die Kraft einer Feder (13) in die Offenstellung verschiebbar ist.

7. Sicherheitsverschluss (1) ) nach Anspruch 6, dadurch gekenntzeichnet, dass die Feder (13) eine Schrauben-Druckfeder ist, die zwischen einer der zweiten Tasche (8) benachbarten ersten Abstützung (15) an der Platte (7) und einer zweiten Abstützung (16) an dem Gehäuse (11) angeordnet ist.

## Claims

1. A safety closure (1) for a chain (2) of an anti-skid chain (3), comprising two seats (8, 9) for receiving a terminal link of the chain, wherein the first seat (9) is delimited by a hook part (10), a housing (11) for receiving the plate (7) is provided, in an assembled operating state the plate is mounted in the housing displaceably between an open position and a closed position, and in the open position the first seat (9) is exposed by the housing toward the edge region, while the second seat (8) is closed by the housing toward the edge region, and in the closed position both the first (9) and second (8) seats are closed by the housing (11) toward the edge region, **characterized in that** the second seat (8) is designed to receive a second chain link (5).

2. The safety closure (1) according to claim 1, **characterized in that** the housing (11) comprises at least one longitudinal slot (14), which is associated with at least one seat (8) and which allows pivoting of a terminal link (5) engaged in this seat even in the closed position.

3. The safety closure (1) according to claim 1 or 2, **characterized in that** the housing (11) comprises a protrusion (17) that closes the first seat (9) toward the edge region in the closed position.

4. The safety closure (1) according to claim 3, **characterized in that** a projecting catch lug (18) is provided on the protrusion (17), the catch lug cooperating with the outer delimitation of the first seat (9) in the assembled operating state so as to prevent the plate from being displaced within the meaning of an exposure of the second seat (8).

5. A safety closure (1) according to any one of claims 1 to 4, **characterized in that** the second seat (8) extends from the edge region substantially normal thereto, and then transitions into an end region (19) that is angled approximately perpendicularly and parallel to the edge region and extends toward the first end.

6. A safety closure (1) according to any one of claims 1 to 5, **characterized in that** the plate (7) can be displaced from the closing position against the force of a spring (13) into the open position.

7. The safety closure (1) according to claim 6, **characterized in that** the spring (13) is a helical compression spring, which is arranged between a first support (15) on the plate (7) and a second support (16) on the housing (11), the first support being adjacent to the second seat (8).

## Revendications

1. Fermeture de sécurité (1) pour une chaîne (2) d'une chaîne antidérapante (3), avec deux poches (8, 9) destinées à recevoir un maillon final de la chaîne, dans laquelle la première poche (9) est délimitée par une pièce de crochet (10), il est prévu un boîtier (11) destiné à recevoir la plaquette (7), la plaquette est agencée dans le boîtier de manière à pouvoir être déplacée entre une position d'ouverture et une position de fermeture dans un état de fonctionnement assemblé, et, dans la position ouverte, la première poche (9) est dégagée vers la région de bord par le boîtier, tandis que la deuxième poche (8) est fermée par le boîtier vers la région de bord, et, dans la position fermée, la première (9) et la deuxième poche (8) sont toutes deux fermées par le boîtier (11) vers la région de bord, **caractérisée en ce que** la deuxième poche (8) est conçue pour recevoir un deuxième maillon de chaîne (5).

2. Fermeture de sécurité (1) selon la revendication 1, **caractérisée en ce que** le boîtier (11) comporte au moins une fente allongée (14) attribuée à au moins une poche (8), permettant, même dans la position de fermeture, de faire pivoter un maillon final (5) accroché dans cette poche.

3. Fermeture de sécurité (1) selon la revendication 1 ou 2, **caractérisée en ce que** le boîtier (11) comporte une saillie (17) fermant la première poche (9) vers la région de bord dans la position de fermeture.

4. Fermeture de sécurité selon la revendication 3, **caractérisée en ce que** sur la saillie (17), il est prévu un ergot de crantage (18) saillant, coopérant avec la limite extérieure de la première poche (9) dans l'état de fonctionnement assemblé, afin d'empêcher un déplacement de la plaquette sous la forme d'un dégagement de la deuxième poche (8).

5. Fermeture de sécurité (1) selon l'une des revendications 1 à 4, **caractérisée en ce que** la deuxième poche (8) s'étend essentiellement normalement vers celle-ci à partir de la région de bord, puis se prolonge par une région finale (19) coudée approximativement en angle droit, qui s'étend vers la première extrémité et parallèlement à la région de bord.

6. Fermeture de sécurité (1) selon l'une des revendications 1 à 5, **caractérisée en ce que** la plaquette (7) peut être déplacée contre la force d'un ressort (13) de la position de fermeture vers la position d'ouverture.

7. Fermeture de sécurité (1) selon la revendication 6, **caractérisée en ce que** le ressort (13) est un ressort de pression à boudin agencé entre un premier appui (15) sur la plaquette (7), adjacent à la deuxième poche (8), et un deuxième appui (16) sur le boîtier (11).
